# FASCICULE DE BREVET EUROPEEN

(11) **EP 2 824 623 B1**
(45) Date de publication et mention de la délivrance du brevet: **15.04.2020**
(21) Numéro de dépôt: 14176232.8
(22) Date de dépôt: 09.07.2014
(51) Int. Cl.: G06Q 20/00, G07G 1/12, G07G 1/00, B65D 55/06, H05K 5/00

(54) **Terminal de paiement intégrant des fonctions de caisse enregistreuse**
Zahlungsendgerät, das integrierte Registrierkassenfunktionen hat
Payment terminal incorporating cash-register functions

(30) Priorité: 12.07.2013 FR 1356906; 12.07.2013 FR 1356905; 12.07.2013 FR 1356910; 12.07.2013 FR 1356871; 12.07.2013 FR 1356872; 12.07.2013 FR 1356873; 05.09.2013 FR 1358515
(43) Date de publication de la demande: 14.01.2015
(73) Titulaire: Ingenico Group, 75015 Paris (FR)
(72) Inventeur: Janot, Cyril, 26400 Grane (FR); Andre, Jérôme, 26800 Montoison (FR); Soleilhavoup, Olivier, 69007 Lyon (FR); Maisonnat, Serge, 26600 Mercurol (FR); Soubirane, Alain, 26500 Bourg-les-Valence (FR)
(74) Mandataire: Vidon Brevets & Stratégie

(56) Documents cités:
- EP-A2- 1 273 250
- WO-A1-93/06564
- WO-A1-2013/021233
- FR-A1- 2 864 286
- US-A1- 2004 060 982

## Description

### 1. Domaine de l'invention

Le domaine de l'invention est celui des terminaux de paiement. La présente invention se rapporte au domaine des terminaux de paiement électroniques. Plus particulièrement, la présente invention se rapporte à un nouveau type de dispositif de paiement électronique qui peut être utilisé à d'autres fins que les opérations de règlement des achats.

### 2. Art antérieur

A l'heure actuelle, les terminaux de paiement sont majoritairement utilisés pour permettre le règlement des achats de biens et de services au sein de points de vente. Ces terminaux comprennent généralement un lecteur de carte à puce et un lecteur de carte magnétique. Ils comprennent également un écran, permettant notamment de visualiser des informations, telles que les montants des transactions, et un clavier de saisie de ces mêmes montants ainsi que de saisie des codes confidentiels des clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit.

En revanche, les terminaux de paiement ne permettent pas, ou peu, de prendre en charge d'autres opérations que celles de règlement des achats. Par exemple, lorsqu'il est connecté à une caisse enregistreuse, le terminal de paiement transmet et reçoit des données de l'opération effectuée avec la caisse enregistreuse (lorsqu'il s'agit d'une caisse enregistreuse intelligente). Cette caisse enregistreuse enregistre dans un journal (ou journalise) les transactions de paiement (qu'il s'agisse de transactions à l'aide du terminal de paiement, de transactions par chèque ou encore de transactions en monnaie fiduciaire). Il arrive cependant qu'une telle caisse enregistreuse ne fonctionne pas ou mal. Ceci n'a heureusement pas pour conséquence de bloquer le paiement effectué sur le terminal de paiement. En revanche, la journalisation des paiements peut être erronée, ce qui peut poser problème, par exemple aux autorités en charge du recouvrement des créances fiscales. Par ailleurs, des commerçants peu scrupuleux peuvent rendre les caisses enregistreuses inopérantes dans le seul but de frauder les autorités en charge du recouvrement des créances fiscales. Ces pratiques ont notamment été observées dans certains pays dans lesquels la pression fiscale est peu facilement admise.

Dans d'autres contextes, le terminal de paiement n'est pas relié (physiquement ou par réseau) à une caisse enregistreuse. Dans ce cas, le fonctionnement de la caisse enregistreuse est indépendant de celui du terminal de paiement. Il n'est donc pas possible de faire le lien entre le journal de vente de la caisse enregistreuse et les transactions réalisées par le terminal, ce qui peut également être une source de fraude vis-à-vis de l'administration.

Il existe donc un besoin de solutions techniques permettant d'éviter ce type de fraude.

Le document FR 2 864 286 décrit un module électronique apte à être utilisé dans un dispositif de transaction électronique, par exemple pour réaliser les fonctions monétiques d'un terminal de paiement électronique. Ce module comprend notamment un dispositif anti-intrusion, délimitant une zone sécurisée, configuré pour détecter les intrusions physiques dans la zone sécurisée. Ce document ne décrit pas de terminal intègre des fonctions de caisse enregistreuse.

Le document WO 2006/115984 décrit un dispositif portable pouvant être tenu à la main et permettant l'enregistrement de commandes de clients et l'obtention d'autorisation de paiement en temps réel et sans fil. Ce document ne décrit pas que le terminal intègre des fonctions de caisse enregistreuse.

Le document EP 1 273 250 se rapporte à la configuration des caisses de paiement présentes dans les magasins et supermarchés. EP 1 273 250 décrit un poste d'enregistrement en caisse convertible en configuration « assistée » ou « non assistée ». En configuration « assistée », un caissier se charge de scanner les produits d'un client, de les disposer dans un sac, et d'enregistrer le paiement du client. En configuration « non assistée », le client scanne lui-même ses produits, les dispose dans un sac, et effectue seul le paiement, ces opérations ayant alors lieu sans l'assistance d'un employé. EP 1 273 250 ne divulgue pas la présence, dans la demi-coque inférieure d'un terminal de paiement comprenant au moins deux modules de mémorisation spécifiques.

Les documents US 20004/060982 et WO 2013/021233 se rapportent à des terminaux de paiement portables, mais ne décrivent pas les moyens d'assemblage de tels terminaux. En particulier, WO 2013/021233 présente une vue en éclaté d'un terminal de paiement comprenant une demi-coque supérieure et une demi-coque inférieure, mais cette vue ne laisse pas apparaître les moyens d'assemblage de ces deux demi-coques : notamment WO 2013/021233 ne décrit pas de moyens d'assemblage, en face avant, de la demi-coque supérieure et de la demi coque inférieure.

### 3. Exposé de l'invention

L'invention ne présente pas ces inconvénients de l'art antérieur. L'invention se rapporte plus particulièrement à un terminal de paiement intégrant des fonctions de caisse enregistreuse, ledit terminal comprenant en outre un clavier, un premier écran d'affichage et des moyens de mise en œuvre de moyens de paiement, ledit terminal comprenant en outre une demi-coque supérieure et une demi-coque inférieure.

Selon la technique proposée, ledit terminal comprend au moins deux modules de mémorisation spécifiques comprenant au moins un module de mémorisation transactionnel et au moins un module de mémorisation cumulatif.

Ainsi, il est possible d'enregistrer les opérations réalisées par les commerçants. Dès lors, la comptabilisation des opérations est facilitée et les organismes de contrôle bénéficient d'un outil de vérification des déclarations fiscales faites par les commerçants.

Selon une caractéristique particulière, ledit au moins un module de mémorisation transactionnel est extractible.

Ainsi, lorsque le module de mémorisation transactionnel (qui mémorise chaque transaction une à une) est plein, il n'est pas nécessaire de remplacer le terminal, mais uniquement de remplacer le module transactionnel.

Selon un mode de réalisation particulier, ladite demi-coque supérieure comprend au moins un évidement d'insertion dudit clavier, une première ouverture de positionnement dudit premier écran d'affichage, une deuxième ouverture de positionnement d'une imprimante et une troisième ouverture de positionnement d'un deuxième écran d'affichage.

Ainsi, le terminal comprend deux écrans d'affichage. Un écran d'affichage traditionnel et un écran d'affichage destiné au client.

Selon un mode de réalisation particulier, ladite troisième ouverture de positionnement dudit deuxième écran d'affichage est conformé de sorte qu'un plan formé par ledit deuxième écran d'affichage, lorsqu'il est inséré dans ladite troisième ouverture, est sensiblement perpendiculaire à un plan formé par ledit premier écran d'affichage, lorsqu'il est inséré dans ladite première ouverture.

Ainsi, ce deuxième écran d'affichage qui est destiné au client reste visible pour ce dernier, par exemple lors de la lecture de codes-barres de produits.

Selon un mode de réalisation particulier, ladite demi-coque inférieure comprend une ouverture donnant accès à un connecteur dudit au moins un module de mémorisation transactionnel et une ouverture de positionnement d'une lentille d'un lecteur de code à barre, le plan d'insertion dudit au moins un module de mémorisation transactionnel dans ledit connecteur étant sensiblement parallèle à une surface de préhension externe de ladite demi-coque inférieure.

Ainsi, il n'est pas possible de retirer le module de mémorisation transactionnel de manière frauduleuse car il se trouve dans le même plan que la main qui porte le terminal.

Selon un mode de réalisation particulier, ladite demi-coque inférieure comprend un logement d'insertion dudit au moins un module de mémorisation cumulatif, le plan d'insertion dudit module de mémorisation cumulatif dans ledit logement étant sensiblement perpendiculaire à un plan d'insertion dudit module de mémorisation transactionnel dans un connecteur.

Selon un mode de réalisation particulier ledit logement d'insertion dudit au moins un module de mémorisation cumulatif comprend au moins une surface de rétention dudit au moins un module de mémorisation cumulatif, ladite au moins une surface de rétention délivrant une surface d'adhérence a une résine de fixation dudit module de mémorisation cumulatif.

Selon l'invention telle que revendiquée la demi-coque inférieure et la demi-coque supérieure comprennent chacune, en face avant, un anneau d'assemblage, lesdits anneaux d'assemblage étant conformés pour définir, lorsque ledit terminal est monté, un orifice d'introduction d'un cylindre métallique, appelé goupille accueillant une vis de fixation de la demi-coque inférieure avec la demi-coque supérieure.

On entend par face avant, la face qui comprend le deuxième écran d'affichage, qui peut être visualisé par le client.

Selon un mode de réalisation particulier, ladite goupille comprend en outre une rainure de rétention d'un sceau de fixation, ledit sceau de fixation étant apposé sur la tête de ladite vis de fixation.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- les figures 1A, 1B et 1C présentent différentes vues en perspective d'un terminal de paiement électronique selon la technique proposée ;
- la figure 2 présente une vue en coupe simplifiée du terminal de paiement électronique des figures 1A à 1C.
- les figures 3a et 3b sont des vues en perspective du terminal de la figure 1 dont la demi-coque supérieure et la demi-coque inférieure ne sont pas assemblées.

### 5. Description d'un mode de réalisation de l'invention

Le principe général de l'invention repose sur l'intégration, au sein d'un terminal de paiement de dimensions standards, de fonctions de caisse enregistreuse. L'adjonction de telles fonctions dans un terminal de paiement pose de nombreux problèmes. Parmi les problèmes rencontrés, on trouve notamment l'adjonction d'un deuxième écran d'affichage, lequel doit être visible pour l'utilisateur, la nécessité de protéger les données dont les autorités en charge du recouvrement des créances fiscales ont besoin, le nécessité d'intégrer un scellement, permettant d'assurer que le terminal ne fait pas l'objet de tentatives d'altérations, la nécessité de n'avoir besoin que d'une seul et unique vis pour fermer le terminal. Ces contraintes ont entrainé la mise en place de solutions nouvelles et inventives. L'origine de ces solutions réside dans deux contraintes principales : la nécessité de disposer d'un deuxième écran et la nécessité de disposer de mémoire fiscale sécurisée.

Selon la technique proposée, le terminal de paiement se substitue, pour les fonctions comptables et fiscales, à la caisse enregistreuse. D'autre part le terminal intègre des modules de mémorisation spécifique. Ces modules de mémorisation comprennent d'une part un module de mémorisation transactionnel (c'est-à-dire que chaque transaction est enregistrée, avec sa date et son taux de TVA) et un module de mémorisation cumulatif. Selon la technique proposée, le module de mémorisation transactionnel est extractible. Ainsi, il est possible, lorsque le module transactionnel est plein, de le remplacer par un autre module transactionnel vierge. Par ailleurs, il est possible de consulter les opérations contenues dans ce module transactionnel à l'aide d'un autre dispositif que le terminal de paiement du commerçant (par exemple un autre terminal adapté à une telle tâche) comme un terminal en possession des administrations fiscales.

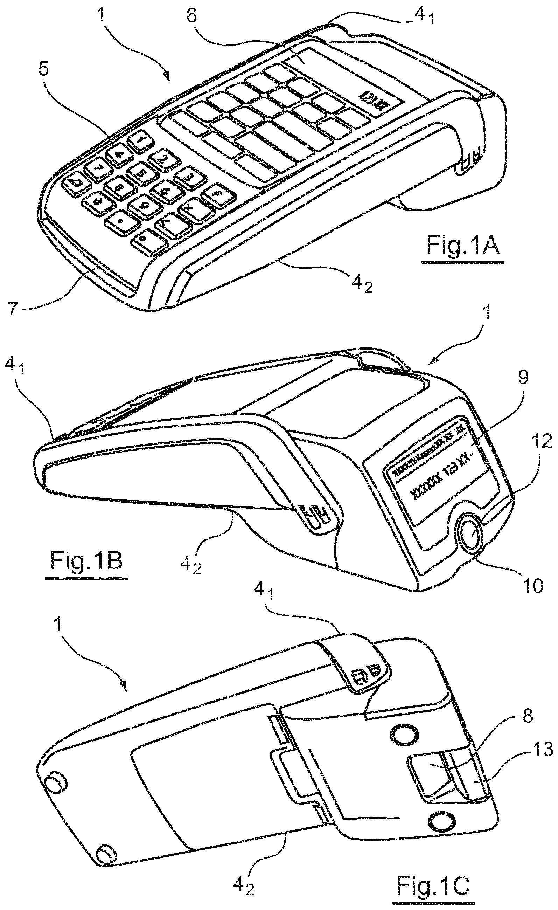

Dans les modes de réalisation décrits plus en détail par la suite en relation avec les figures 1A, 1B, 1C, 2 et 3, un tel terminal de paiement 1 qui intègre des fonctions de caisse enregistreuse, et même se substitue, pour les fonctions comptables et fiscales, à la caisse enregistreuse. En outre, un tel terminal 1 intègre plusieurs modules de mémorisation spécifiques, à savoir un module de mémorisation transactionnel 2 (c'est-à-dire que chaque transaction est enregistrée) et un module de mémorisation cumulatif 3.

Selon un mode de réalisation de l'invention, le module de mémorisation transactionnel 2 est extractible. Ainsi, il est possible, lorsque le module de mémorisation transactionnel 2 est plein, de le remplacer par un autre module de mémorisation transactionnel vierge. Par ailleurs, il est possible de consulter les opérations contenues dans ce module de mémorisation transactionnel 2 à l'aide d'un autre dispositif que le terminal de paiement 1 lui-même.

Selon un mode de réalisation de l'invention, un tel terminal 1 comprend une enceinte sécurisée au sens PCI (« Payment Card Industry ») et une enceinte sécurisée selon des règlementations nationales en vigueur. Ces deux enceintes sont contenues au sein du terminal, qui est construit à partir d'une demi-coque supérieure 4₁ et d'une demi-coque inférieure 4₂. Le terminal 1 comprend en outre un clavier 5 (comprenant les touches nécessaires à la saisie des données), un écran 6 et les moyens 7 nécessaires à l'utilisation d'un moyen de paiement (lecteur de carte à puce et/ou lecteur de carte à bande et/ou lecteur sans contact). Le terminal comprend également un module 8 de lecture de code à barres, lequel se trouve disposé dans la demi-coque inférieure 4₂. Ainsi, le terminal 1 peut être utilisé à la manière d'un dispositif classique de lecture de code à barres.

Selon un mode de réalisation de l'invention, un tel terminal 1 est portable. Plus particulièrement, un tel terminal 1 n'excède pas cinq cent grammes, la largeur du terminal au niveau de la touche « 5 » du clavier 5 n'excède pas 7,62 cm, la somme de la hauteur et de la largeur du terminal 1 au niveau de la touche « 5 » du clavier 5 n'excède pas 10,16 cm et la longueur du clavier est inférieure à 10,16 cm.

Selon un mode de réalisation de l'invention, un tel terminal 1 comprend un deuxième écran 9, dit écran utilisateur. Ce deuxième écran 9 permet à l'utilisateur de suivre l'enregistrement des articles qu'il achète au fur et à mesure de la saisie de ces articles. Il s'agit en quelque sorte d'un écran d'information destiné à l'utilisateur. Cet écran 9 est positionné de manière à ce que le plan de l'écran soit sensiblement parallèle à un axe d'acquisition de code à barres du lecteur de code à barres 8 (et/ou sensiblement perpendiculaire au plan formé par le premier écran). Ainsi, l'écran 9 reste visible pour l'utilisateur lorsque le commerçant scanne les articles. La transmission des données affichées par l'écran 9 est par ailleurs sécurisée, dans la mesure où le flexible de l'écran 9 forme une cage autour d'un élément presseur (en anglais « puck ») sur lequel l'écran exerce une pression une fois le terminal monté. Si l'écran devait être bougé, alors l'élément presseur n'exercerait plus de pression et une alarme se déclencherait. Si le flexible devait être troué ou altéré, une alarme se déclencherait également.

Selon un mode de réalisation de l'invention, la demi-coque inférieure 4₂ et la demi-coque supérieure 4₁ sont assemblées selon une méthode d'assemblage particulière. Cette méthode assure qu'il n'est pas possible d'ouvrir le terminal 1 avec un mouvement translatif. Plus particulièrement, avec les fonctions mises en œuvre par le terminal 1, le risque est grand que des commerçants indélicats souhaitent altérer le fonctionnement du terminal 1. Avec les terminaux de l'art antérieur, l'assemblage est souvent translatif : cela signifie que l'assemblage est réalisé en posant une demi-coque par-dessus une autre demi-coque. Il est donc possible de soulever légèrement une des demi-coques (une fois les vis d'assemblage enlevées) pour avoir accès à l'ensemble des composants du terminal. Au contraire, selon la technique proposée, l'ouverture ne peut pas être faite par translation des demi-coques l'une par rapport à l'autre. Selon un mode de réalisation de l'invention, l'ouverture est effectuée selon un mouvement de rotation. Selon un mode de réalisation de l'invention, l'axe de rotation pour l'ouverture du terminal 1 (c'est-à-dire l'axe de rotation de la première demi-coque 4₁ par rapport à la deuxième demi-coque 4₂) est situé au niveau d'une fente 7 d'introduction de carte à puce dans le terminal 1. Plus particulièrement, cette technique permet d'éviter que l'on accède aux composants sensibles du terminal. En effet, ces composants, qui sont regroupées dans l'enceinte PCI, sont globalement situés à proximité du lecteur de carte à mémoire (lecteur CAM, qui sert à l'introduction de cartes à puce), de l'écran 6 et du clavier 5. Or, une ouverture par rotation au niveau de la fente 7 d'insertion du lecteur CAM permet de détecter rapidement l'ouverture, car il est nécessaire d'avoir un angle d'ouverture important pour pouvoir accéder aux composants qui sont les plus proches de l'axe de rotation. Lorsque l'angle d'ouverture est important, une contremesure de détection d'ouverture est mise en œuvre. Cette contremesure déclenche la mise hors fonction du terminal 1.

Selon un mode de réalisation de l'invention, la demi-coque inférieure 4₂ et la demi-coque supérieure 4₁ comprennent, en face avant, c'est-à-dire sous le deuxième écran d'affichage destiné au client, un anneau d'assemblage 10. Cet anneau d'assemblage est utilisé pour l'introduction d'une unique vis de fermeture 11. Seule l'extraction de cette vis de fermeture 11 permet d'ouvrir le terminal 1.

Selon un mode de réalisation de l'invention, l'assemblage du terminal 1 est donc réalisé d'une part en introduisant au moins un tenon de forme particulière (faisant partie de la demi-coque supérieure 4₁) dans un orifice de réception particulier de la demi-coque inférieure 4₂. Lorsque les tenons sont introduits dans les orifices, le mouvement de rotation est poursuivi pour refermer le terminal 1. Ce mouvement de rotation est achevé lorsque les deux anneaux d'assemblage sont emboîtés l'un dans l'autre (il sont coaxiaux). La vis 11 peut alors être introduite, au travers de ces deux anneaux, dans un support adapté afin d'empêcher le démontage du terminal 1. Selon la technique proposée, une fois la vis 11 insérée, un évidement de quelques millimètres est obtenu au-dessus de la surface plane de la tête de la vis. L'évidement s'étend longitudinalement, au niveau d'une goupille insérée dans l'orifice créé par la paroi circulaire des anneaux des demi-coques. Cet évidement est utilisé pour recevoir un sceau 12, attestant de l'inviolabilité du terminal 1.

Selon un mode de réalisation de l'invention, la goupille insérée dans l'orifice créé par l'assemblage des anneaux des deux demi-coques comprend une rainure interne. Cette rainure est utilisée comme une zone de réception du sceau 12 de fermeture du terminal 1. Elle permet d'éviter que le sceau puisse être extrait par mégarde.

Par ailleurs, afin de faciliter l'insertion du sceau 12, le terminal 1 est configuré pour être déposé sur une enclume. Plus particulièrement, la demi-coque inférieure 4₂ comprend un renforcement 13 permettant de frapper le terminal lorsque celui-ci est posé sur l'enclume au niveau de ce renforcement. On évite ainsi que le terminal soit endommagé lors de l'opération de pose de scellé 12.

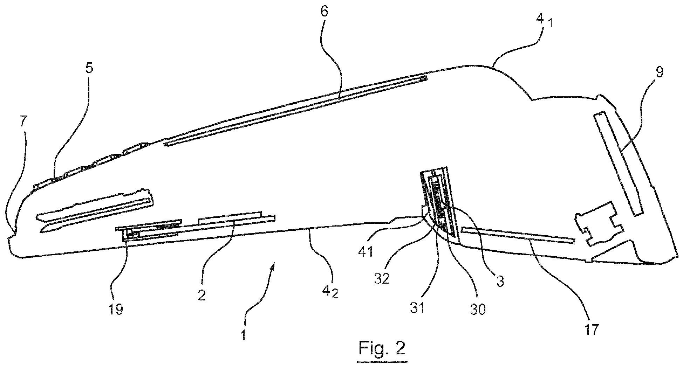

La figure 2 présente de manière générale la structure interne d'un tel terminal de paiement électronique, dans un mode de réalisation particulier de l'invention. Un tel terminal 1 comprend notamment également une carte-mère 14, un circuit imprimé secondaire 18, une alimentation de type batterie 15, une imprimante 16 permettant notamment d'imprimer des tickets de paiement, pour chaque transaction effectuée. Un circuit imprimé 17 pilote l'affichage sur les deux écrans 6 et 9. Le module de mémorisation transactionnel 2 (ou « EKU Board ») s'enfiche dans un connecteur 19.

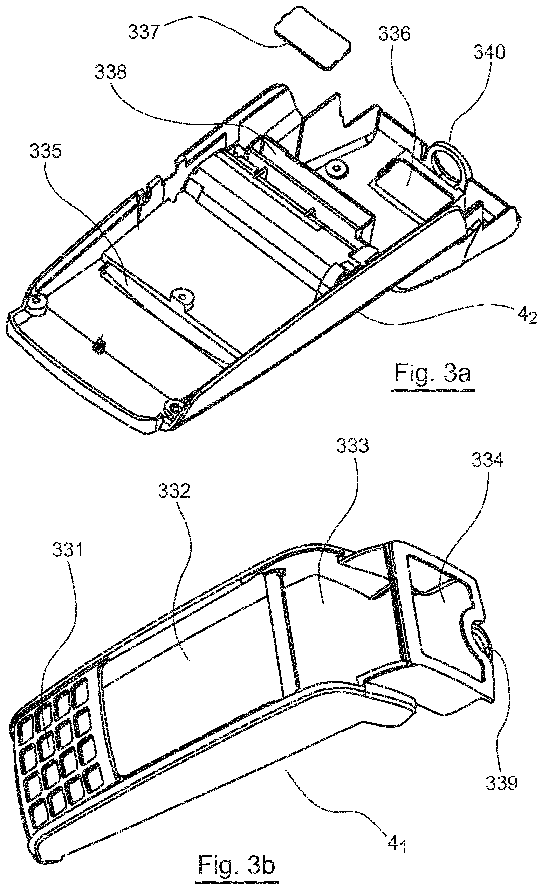

Les figures 3a et 3b représentent le terminal de paiement électronique 1 dont le boitier 10 est démonté. La demi-coque supérieure 4₁ et la demi-coque inférieure 4₂ sont ainsi séparées, ce qui permet d'accéder aux composants électroniques internes.

Pour permettre l'assemblage de la demi-coque inférieure 4₂ et de la demi-coque supérieure 4₁ dans des conditions satisfaisantes de sécurité, des éléments complémentaires formant charnière sont prévus à une première extrémité de la coque inférieure 4₂ et à une première extrémité de la coque supérieure 4₁. Par ailleurs, des éléments de verrouillage sont prévus à une seconde extrémité, opposée à la première extrémité, de la coque inférieure 4₂ et à la seconde extrémité, opposée à la première extrémité, de la coque supérieure 4₂.

La demi-coque supérieure 4₁ comprend un évidement d'insertion du clavier 331, une première ouverture de positionnement du premier écran d'affichage 332, une deuxième ouverture de positionnement d'une imprimante 333 et une troisième ouverture de positionnement d'un deuxième écran d'affichage 334.

La troisième ouverture de positionnement du deuxième écran d'affichage est conformé de sorte qu'un plan formé par le deuxième écran d'affichage, lorsqu'il est inséré dans la troisième ouverture, est sensiblement perpendiculaire à un plan formé par le premier écran d'affichage, lorsqu'il est inséré dans la première ouverture.

La demi-coque inférieure 4₂ comprend une ouverture 335 donnant accès à un connecteur d'un module de mémorisation transactionnel et une ouverture 336 de positionnement d'une lentille 337 d'un lecteur de code à barre, le plan d'insertion du un module de mémorisation transactionnel dans le connecteur étant sensiblement parallèle à une surface de préhension externe de la demi-coque inférieure.

La demi-coque inférieure 4₂ comprend un logement 338 d'insertion du un module de mémorisation cumulatif, le plan d'insertion du module de mémorisation cumulatif dans le logement étant sensiblement perpendiculaire à un plan d'insertion du module de mémorisation transactionnel dans un connecteur.

Le logement d'insertion du un module de mémorisation cumulatif comprend une surface de rétention du un module de mémorisation cumulatif. La surface de rétention délivrant une surface d'adhérence a une résine de fixation du module de mémorisation cumulatif.

La demi-coque inférieure 4₂ et la demi-coque supérieure 4₁ comprennent chacune, en face avant, un anneau d'assemblage 339, 340, les anneaux d'assemblage étant conformés pour définir, lorsque le terminal est monté, un orifice d'introduction d'un cylindre métallique, appelé goupille accueillant une vis de fixation de la demi-coque inférieure avec la demi-coque supérieure.

## Revendications

1. Terminal de paiement (1) intégrant des fonctions de caisse enregistreuse, ledit terminal comprenant en outre un clavier (5), un premier écran d'affichage (6) et des moyens de mise en œuvre de moyens de paiement, ledit terminal comprenant en outre une demi-coque supérieure (41) et une demi-coque inférieure (42), ledit terminal étant **caractérisé**
**en ce qu'**il comprend au moins deux modules de mémorisation spécifiques comprenant au moins un module de mémorisation transactionnel (2) et au moins un module de mémorisation cumulatif (3) ;
et **en ce que** la demi-coque inférieure (42) et la demi-coque supérieure (41) comprennent chacune, en face avant, un anneau d'assemblage (10), lesdits anneaux d'assemblage (10) étant conformés pour définir, lorsque ledit terminal est monté, un orifice d'introduction d'un cylindre métallique, appelé goupille accueillant une vis de fixation (11) de la demi-coque inférieure avec la demi-coque supérieure.

2. Terminal de paiement selon la revendication 1, **caractérisé en ce que** ledit au moins un module de mémorisation transactionnel (2) est extractible.

3. Terminal de paiement selon la revendication 1, **caractérisé en ce que** ladite demi-coque supérieure (41) comprend au moins un évidement d'insertion dudit clavier (5), une première ouverture de positionnement dudit premier écran d'affichage (6), une deuxième ouverture de positionnement d'une imprimante et une troisième ouverture de positionnement d'un deuxième écran d'affichage (9).

4. Terminal selon la revendication 3, **caractérisé en ce que** ladite troisième ouverture de positionnement dudit deuxième écran d'affichage (9) est conformé de sorte qu'un plan formé par ledit deuxième écran d'affichage, lorsqu'il est inséré dans ladite troisième ouverture, est sensiblement perpendiculaire à un plan formé par ledit premier écran d'affichage (6), lorsqu'il est inséré dans ladite première ouverture.

5. Terminal de paiement selon la revendication 1, **caractérisé en ce que** ladite demi-coque inférieure (42) comprend une ouverture donnant accès à un connecteur dudit au moins un module de mémorisation transactionnel (2) et une ouverture de positionnement d'une lentille d'un lecteur de code à barre, le plan d'insertion dudit au moins un module de mémorisation transactionnel dans ledit connecteur étant sensiblement parallèle à une surface de préhension externe de ladite demi-coque inférieure (42).

6. Terminal de paiement selon la revendication 1, **caractérisé en ce que** ladite demi-coque inférieure (42) comprend un logement d'insertion dudit au moins un module de mémorisation cumulatif (3), le plan d'insertion dudit module de mémorisation cumulatif (3) dans ledit logement étant sensiblement perpendiculaire à un plan d'insertion dudit module de mémorisation transactionnel (2) dans un connecteur.

7. Terminal selon la revendication 6, **caractérisé en ce que** ledit logement d'insertion dudit au moins un module de mémorisation cumulatif (3) comprend au moins une surface de rétention dudit au moins un module de mémorisation cumulatif (3), ladite au moins une surface de rétention délivrant une surface d'adhérence a une résine de fixation dudit module de mémorisation cumulatif.

8. Terminal selon la revendication 1, **caractérisé en ce que** ladite goupille comprend en outre une rainure de rétention d'un sceau de fixation, ledit sceau de fixation étant apposé sur la tête de ladite vis de fixation.

## Patentansprüche

1. Zahlungsterminal (1), das Funktionen einer Registrierkasse aufweist, wobei das Terminal ferner eine Tastatur (5), einen ersten Anzeigebildschirm (6) und Mittel zum Einsetzen von Zahlungsmitteln aufweist, wobei das Terminal ferner eine obere Halbschale (41) oder eine untere Halbschale (42) aufweist, wobei das Terminal **dadurch gekennzeichnet ist,**
**dass** es mindestens zwei spezifische Speichermodule aufweist, die mindestens ein transaktionales Speichermodul (2) und mindestens ein kumulatives Speichermodul (3) aufweisen,
und dadurch, dass die untere Halbschale (42) und die obere Halbschale (41) jeweils auf der Vorderseite einen Montagering (10) aufweisen, wobei die Montageringe (10) ausgebildet sind, um, wenn das Terminal montiert ist, eine Einführöffnung eines Metallzylinders zu definieren, der Stift genannt wird, der eine Schraube zum Befestigen (11) der unteren Halbschale an der oberen Halbschale aufnimmt.

2. Zahlungsterminal nach Anspruch 1, **dadurch gekennzeichnet, dass** das mindestens eine transaktionale Speichermodul (2) herausziehbar ist.

3. Zahlungsterminal nach Anspruch 1, **dadurch gekennzeichnet, dass** die obere Halbschale (41) mindestens eine Ausnehmung zum Einfügen der Tastatur (5), eine erste Öffnung zum Anordnen des ersten Anzeigebildschirms (6), eine zweite Öffnung zum Anordnen eines Druckers und eine dritte Öffnung zum Anordnen eines zweiten Anzeigebildschirms (9) aufweist.

4. Terminal nach Anspruch 3, **dadurch gekennzeichnet, dass** die dritte Öffnung zum Anordnen des zweiten Anzeigebildschirms (9) derart ausgebildet ist, dass eine Ebene, die durch den zweiten Anzeigebildschirm gebildet ist, wenn er in der dritten Öffnung eingefügt ist, im Wesentlichen senkrecht zu einer Ebene ist, die durch den ersten Anzeigebildschirm (6) gebildet ist, wenn er in der ersten Öffnung eingefügt ist.

5. Zahlungsterminal nach Anspruch 1, **dadurch gekennzeichnet, dass** die untere Halbschale (42) eine Öffnung, die Zugang zu einem Steckverbinder des mindestens einen transaktionalen Speichermoduls (2) bietet, und eine Öffnung zum Anordnen von einer Linse eines Strichcodelesers aufweist, wobei die Ebene zum Einfügen des mindestens einen transaktionalen Speichermoduls in den Steckverbinder im Wesentlichen parallel zu einer externen Greifoberfläche der untere Halbschale (42) ist.

6. Zahlungsterminal nach Anspruch 1, **dadurch gekennzeichnet, dass** die untere Halbschale (42) eine Aufnahme zum Einfügen des mindestens einen kumulativen Speichermoduls (3) aufweist, wobei die Ebene zum Einfügen des kumulativen Speichermoduls (3) in die Aufnahme im Wesentlichen senkrecht zu einer Ebene zum Einfügen des transaktionalen Speichermoduls (2) in den Steckverbinder ist.

7. Terminal nach Anspruch 6, **dadurch gekennzeichnet, dass** die Aufnahme zum Einfügen des mindestens einen kumulativen Speichermoduls (3) mindestens eine Rückhalteoberfläche des mindestens einen kumulativen Speichermoduls (3) aufweist, wobei die mindestens eine Rückhalteoberfläche einem Harz zum Befestigen des kumulativen Speichermoduls eine Haftfläche bereitstellt.

8. Terminal nach Anspruch 1, **dadurch gekennzeichnet, dass** der Stift ferner eine Rückhaltenut eines Befestigungssiegels aufweist, wobei der Befestigungssiegel auf den Kopf der Befestigungsschraube angebracht wird.

## Claims

1. Payment terminal (1) incorporating functions of a cash register, the terminal further comprising a keyboard (5), a first display screen (6) and means for implementing payment means, the terminal further comprising an upper half-shell (41) and a lower half-shell (42), the terminal being **characterised in that**
it comprises at least two specific memory modules which comprise at least one transaction memory module (2) and at least one cumulative memory module (3);
and **in that** the lower half-shell (42) and the upper half-shell (41) each comprise, at the front face, an assembly ring (10), the assembly rings (10) being shaped to define, when the terminal is mounted, an introduction hole for a metal cylinder, which is referred to as a pin, which receives a fixing screw (11) for the lower half-shell with respect to the upper half-shell.

2. Payment terminal according to claim 1, **characterised in that** the at least one transaction memory module (2) can be removed.

3. Payment terminal according to claim 1, **characterised in that** the upper half-shell (41) comprises at least one insertion recess of the keyboard (5), a first opening for positioning the first display screen (6), a second opening for positioning a printer and a third opening for positioning a second display screen (9).

4. Terminal according to claim 3, **characterised in that** the third opening for positioning the second display screen (9) is shaped so that a plane formed by the second display screen, when it is inserted into the third opening, is substantially perpendicular to a plane formed by the first display screen (6) when it is inserted into the first opening.

5. Payment terminal according to claim 1, **characterised in that** the lower half-shell (42) comprises an opening which affords access to a connector of the at least one transaction memory module (2) and an opening for positioning a lens of a barcode reader, the insertion plane of the at least one transaction memory module in the connector being substantially parallel with an external gripping surface of the lower half-shell (42).

6. Payment terminal according to claim 1, **characterised in that** the lower half-shell (42) comprises a housing for inserting the at least one cumulative memory module (3), the insertion plane of the cumulative storage module (3) in the housing being substantially perpendicular to an insertion plane of the transaction memory module (2) in a connector.

7. Terminal according to claim 6, **characterised in that** the housing for inserting the at least one cumulative memory module (3) comprises at least one surface for retaining the at least one cumulative memory module (3), the at least one retention surface which provides an adhesion surface has a resin for fixing the cumulative memory module.

8. Terminal according to claim 1, **characterised in that** the pin further comprises a groove for retaining a fixing seal, the fixing seal being fixed to the head of the fixing screw.
